# FASCICULE DE BREVET EUROPEEN

(11) **EP 1 491 781 B1**
(45) Date de publication et mention de la délivrance du brevet: **30.11.2005**
(21) Numéro de dépôt: 04291460.6
(22) Date de dépôt: 11.06.2004
(51) Int. Cl.: F16C 7/06

(54) **Biellette de liaison entre deux organes mécaniques**
Verbindungsstange zwischen zwei mechanischen Teilen
Connecting rod between two mechanical members

(30) Priorité: 27.06.2003 FR 0307811
(43) Date de publication de la demande: 29.12.2004
(73) Titulaire: SNECMA, 75015 Paris (FR)
(72) Inventeur: Naudet, Jacky, 91070 Bondoufle (FR); Etoile, Gérard, 77140 Nemours (FR); Babec, Frédéric, 77130 Saint Germain Laval (FR)
(74) Mandataire: David, Daniel

(56) Documents cités:
- US-A- 3 394 212
- US-A- 4 226 550
- US-A- 5 431 540

## Description

L'invention porte sur un moyen de liaison mécanique entre un premier et un deuxième organes tels qu'un organe de commande et une pièce commandée.

Un moteur à turbine à gaz comprend, par exemple, des portes obturant des ouvertures de décharge du compresseur basse pression pour en contrôler le fonctionnement. Les portes sont ménagées sur la paroi extérieure de la veine en aval du compresseur, et réparties régulièrement tout autour de l'axe du moteur. On en compte par exemple une dizaine. Elles sont généralement montées de manière à basculer chacune autour d'un axe situé dans un plan transversal par rapport à l'axe du moteur. On commande l'ouverture simultanée des portes au moyen d'un organe de commande annulaire que l'on actionne en rotation par un vérin approprié. Le mouvement de rotation de cet anneau est transformé en un mouvement axial par des pièces de transmission en forme d'équerre. Une branche de cette dernière est reliée à une chape solidaire de la porte qu'elle commande au moyen d'une biellette.

Compte tenu des tolérances de montage et de fabrication des pièces, on a besoin d'un moyen de réglage de la longueur de la biellette actionnant chaque porte. Ce moyen permet d'assurer que les portes occupent toutes la même position de consigne. Notamment, lorsqu'on place l'anneau de commande dans la position de fermeture des portes, ces dernières doivent toutes obturer convenablement les ouvertures.

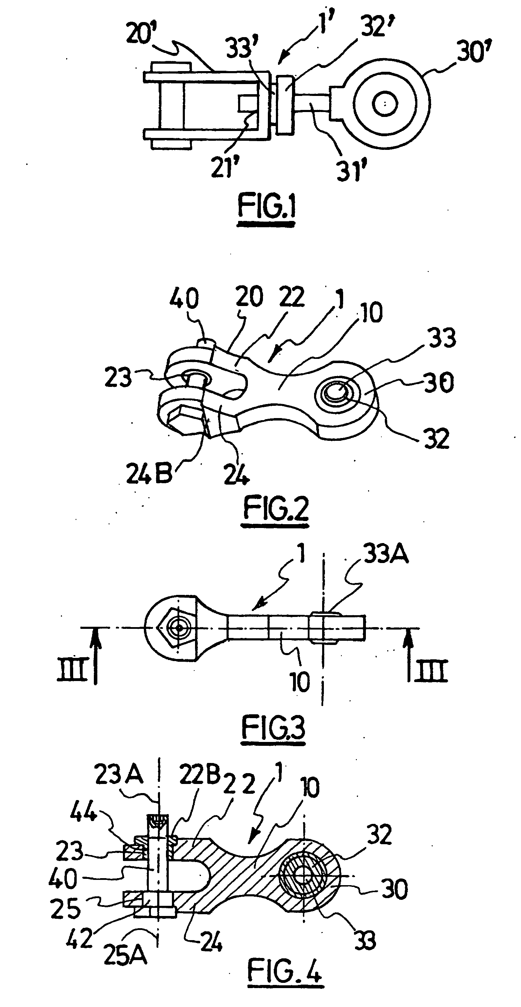

En référence à la figure 1, dans la configuration de l'état actuel de la technique, une biellette 1' comprend un anneau de fixation 30' à une extrémité et une chape 20' à l'autre extrémité. Elle est en deux parties : l'anneau est pourvu d'une tige filetée 31' coopérant avec un orifice taraudé 21' dans la chape 20'. On procède au réglage de la longueur de la biellette 1' en tournant une pièce par rapport à l'autre, et on assure l'immobilisation des deux parties entre elles au moyen d'un écrou 32' bloquant une rondelle 33' glissée sur la tige filetée 31'. L'écrou 32' est lui-même verrouillé par un fil métallique. Le montage et le réglage de la biellette ne sont pas simples car il faut libérer une des attaches pour réaliser l'ajustement de la longueur. La finesse de réglage est déterminée ; elle est donnée par la variation de longueur produite par la rotation sur un demi-tour. Dans cet exemple, le réglage est de 0,45mm par demi-tour.

Une telle biellete de liaison, selon le préambule de la revendication 1, est aussi connu du document US 4 226 550 A.

Ce type de biellette présente l'inconvénient en aéronautique de devoir être réalisé dans un matériau adapté pour supporter un filetage. On utilise dans ce but un acier. Cependant ce métal a une masse élevée par rapport à d'autres métaux généralement utilisés dans ce domaine, et surtout il est sensible à la corrosion. En outre, la biellette est composée de cinq pièces différentes ce qui est un facteur pénalisant en termes de gestion et d'entretien.

La demanderesse s'est fixé comme objectif la réalisation d'une biellette de liaison rigide entre un premier et un deuxième organe, comportant un moyen de réglage de la distance entre les deux organes, la biellette comprenant une chape avec un goujon coopérant avec une patte de fixation sur le premier organe.

On parvient à cet objectif avec une biellette dont le goujon est monté sur la chape par des moyens formant palier à l'intérieur d'un logement ménagé sur la chape, l'axe du goujon et l'axe du moyen formant palier n'étant pas confondus, la biellette comportant un moyen de butée permettant d'immobiliser le goujon dans au moins deux positions différentes, par rapport à la chape.

La biellette de l'invention présente l'avantage d'éviter l'emploi de pièces filetées. On peut ainsi utiliser un métal plus léger que l'acier, un alliage à base d'aluminium par exemple. Ce dernier par ailleurs résiste beaucoup mieux à la corrosion que l'acier. La fabrication de la biellette en est aussi simplifiée car elle peut être constituée d'un seul bloc, les moyens de réglage étant déportés sur la chape de montage. La structure de cette biellette également permet un réglage au moins égal à celui recherché, in situ, sans imposer au technicien régleur le démontage de la biellette à une de ses extrémités.

La présente invention est décrite pour une biellette de transmission rigide entre un anneau de commande des portes de décharge du flux d'un compresseur. Cependant elle vaut à toute application mettant en oeuvre une biellette de transmission rigide dont la longueur peut être ajustée à des positions prédéterminées.

D'autres caractéristiques et avantages apparaîtront à la lecture de la description ci-après d'un mode de réalisation de l'invention, en référence aux dessins en annexe sur lesquels :
- le figure 1 montre une biellette de l'art antérieur vue de profil,
- la figure 2 montre une biellette de l'invention vue en perspective,
- la figure 3 montre la biellette selon la figure 2 vue de profil,
- la figure 4 montre la biellette en coupe selon la direction III-III de la figure 3,
- la figure 5A montre le goujon de l'invention, vu de profil,
- la figure 5B montre le goujon de la figure 5A, vu dans l'axe,
- la figure 5C montre le moyen formant palier associé au goujon de la figure 5B, vu dans l'axe,
- les figures 6A et 6B présentent, à une autre échelle, des variantes de réalisation de deux têtes permettant des réglages différents.

La biellette 1 de l'invention comprend un corps avec un élément en forme de tige 10 prolongé d'un côté par moyen d'attache en forme de chape 20 pour un montage sur une patte de fixation solidaire d'un premier organe mécanique non représenté. Il peut s'agir par exemple d'une porte de décharge de compresseur basse pression dans un moteur à turbine à gaz. A l'autre extrémité, la tige est solidaire d'un anneau 30 avec une rotule 32 pour un montage sur une patte de fixation solidaire d'un deuxième organe à relier au premier. La rotule 32 est percée d'une ouverture 33 cylindrique d'axe 33A pour le logement d'un goujon non représenté pour la fixation à ladite patte de fixation du deuxième organe. Il peut s'agir de l'équerre ou guignol rattaché à l'anneau de commande des portes de décharge du compresseur.

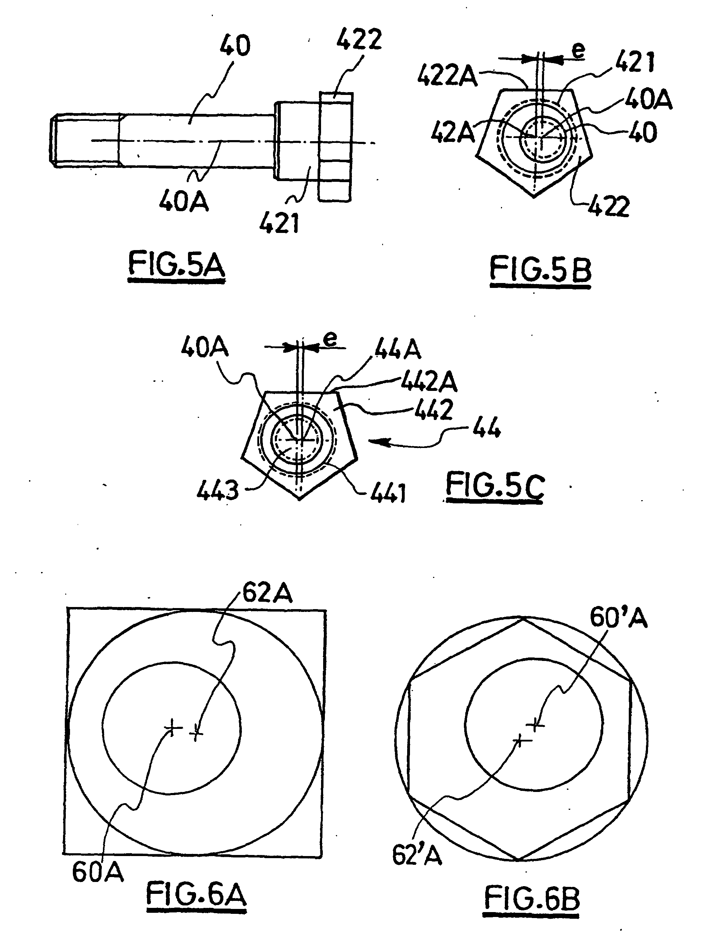

Comme on le voit sur la figure 4, la chape 20 est constituée de deux pattes de fixation 22 et 24 parallèles entre elles et pourvues chacune d'un orifice traversant circulaire 23 et 25 d'axes 23A et 25A. Les axes 23A, 25A des deux orifices 23, 25 sont confondus. Un goujon 40 est monté sur la chape entre les deux pattes par des moyens formant paliers 42 et 44. Le goujon 40, comme on le voit sur la figure 5, a une forme cylindrique à section circulaire, d'axe 40A. Un moyen formant palier 42 est ici solidaire du goujon 40 et en fait partie intégrante. Le second moyen 44 est monté coulissant sur le goujon. Le premier moyen 42 comprend une surface de palier 421 cylindrique à section circulaire. Son axe 42A est parallèle à l'axe du goujon 40A. Les deux axes 40A et 42A ne sont pas confondus ; ils sont distants l'un de l'autre d'une distance « e » déterminée. Le premier moyen 42 comprend aussi une portion formant tête de palier 422. Cette tête est également cylindrique avec au moins une surface plane 422A formant butée. Cette surface 422A est parallèle à l'axe 42A de la surface de palier.

Le deuxième moyen formant palier 44, que l'on voit sur la figure 5C, est constitué d'une partie cylindrique 441 circulaire d'axe 44A confondu avec l'axe 42A de palier du premier moyen 42. La portion cylindrique est pourvue d'un orifice 443 centré sur l'axe du goujon 40. Le deuxième moyen 44 comprend également une tête 442 avec, comme la première tête, au moins une surface de butée 442A plane parallèle à l'axe du goujon.

La surface extérieure de la branche 22 de la chape 20 comprend un moyen de butée 22B, ici en forme de surface plane. Sa distance, à l'axe 23A de l'orifice 23 ménagé dans la branche 22 est légèrement supérieure ou égale à la distance séparant la surface de butée 442A, sur la tête 442, du moyen formant palier 44.

De la même façon, la surface extérieure de la branche 24 de la chape 20 comprend un moyen de butée 24B. Sa distance à l'axe 25A de l'orifice 25 ménagé dans la branche 24 est légèrement supérieure ou égale à la distance séparant la surface de butée 422A, sur la tête 422 du moyen formant palier 42.

Comme on peut le voir sur la figure 5C, la surface de palier cylindrique 441 vue de dessus forme un cercle tout comme le cylindre du goujon. Le centre du cylindre 40 est excentré par rapport au centre du cercle de palier 441. sur la figure 4, la surface 442A est en butée contre la surface de butée 22B. De la même façon, la surface de butée 422A est en butée contre la surface de butée 24B sur l'autre patte de la chape.

Les têtes 422 et 442 ont dans ce mode de réalisation une forme de pentagone et comprennent chacune cinq surfaces de butée 422A à E et 442A à E.

Selon la disposition du goujon par rapport à la chape, on ajuste la distance entre l'axe 40A du goujon et l'axe 33A de la rotule. Dans cet exemple de réalisation, on dispose de trois longueurs de réglage. Il suffit de mettre en place les têtes 442 et 422 dans la position appropriée pour présenter la paire de surfaces de butée, 442A-422A, 442B-422B, 442C-422C ou 442D-422D, 442E-422E qui convient.

On utilise une biellette de la façon suivante dans l'exemple de commande de portes de décharge de compresseur basse pression d'un moteur à turbine à gaz. Les portes sont en position d'obturation des ouvertures. Pour chacune des portes, on a placé une équerre de commande sur le carter de manière qu'elle puisse tourner autour d'un axe ayant une direction radiale. Une extrémité de l'équerre est solidaire de l'anneau de commande de l'ensemble des portes. L'autre extrémité est reliée par l'intermédiaire de la biellette à la porte correspondante.

On commence par monter la biellette par l'extrémité comprenant l'anneau puis on dispose la chape de l'autre extrémité en regard de la patte de fixation du second organe. On glisse le goujon 40 à travers les orifices 23 et 25 de la chape 20 et on le tourne autour de son axe jusqu'à trouver la surface de butée de sa tête 422 qui convient. La distance entre les axes 33A et 40A correspond à la distance de consigne entre les deux organes à relier avec une précision fonction de l'excentricité « e ». Lorsque la tête 422 est en place on introduit le second moyen 44 dans la même position.

On a décrit un goujon avec un moyen de palier intégré 42. L'invention comprend aussi la variante non représentée où ce moyen est distinct comme le second moyen de palier 44.

On a représenté dans ce premier mode de réalisation, des têtes en forme de pentagone, permettant trois position de réglage de la distance entre les axes 33A et 40A. On comprend que l'on peut choisir d'autres positions entre les centres excentrés ou d'autres formes polygonales ; en particulier les têtes peuvent avoir une forme carrée ou bien en hexagone pour un autre nombre de positions de réglage.

La présente invention présente l'avantage d'adapter aisément la précision de réglage à l'application. On choisit alors le goujon avec une tête présentant un nombre de positions de réglage approprié.

Sur la figure 6A par exemple la tête des paliers est à quatre pans. L'axe 60A du goujon est excentré par rapport à l'axe du palier 62A. Le nombre de réglages dans cette disposition est de trois. Dans l'exemple de la figure 6B, la tête des paliers est à six pans. L'axe du goujon 60'A est excentré par rapport à l'axe 62'A du palier, le nombre de réglages est ici de 4.

## Revendications

1. Biellette de liaison (1) rigide entre un premier et un deuxième organes, comportant un moyen de réglage de la distance entre les deux organes, la biellette comprenant une chape (20) avec un goujon (40) transversal, coopérant avec une patte de fixation sur le premier organe, **caractérisé par le fait que** le goujon (40) est monté sur la chape (20) par des moyens (42, 44) formant paliers chacun à l'intérieur d'un logement (23, 25) ménagé sur la chape, l'axe (40A) du goujon et l'axe (42A respectivement 44A) des moyens formant paliers n'étant pas confondus, la biellette (1) comportant un moyen de butée (22B, 24B) permettant d'immobiliser le goujon dans au moins deux positions par rapport à la chape.

2. Biellette selon la revendication 1 dont au moins un (42) des deux paliers (42, 44) est solidaire du goujon (40).

3. Biellette selon la revendication 1 ou 2 dont les moyens formant paliers (42, 44) comprennent au moins une surface formant butée (422A, 442A) coopérant avec le moyen de butée (22B, 24B) sur la biellette.

4. Biellette selon la revendication 3 dont les moyens formant paliers (42, 44) comprend une pluralité de surfaces de butée (422A respectivement 442A) disposées selon un polygone.

5. Biellette selon la revendication 4 dont le polygone comprend de quatre à six côtés.

## Patentansprüche

1. Steife Verbindungs-Stange (1) zwischen einem ersten und einem zweiten Organ, umfassend eine Vorrichtung zum Steuern des Abstandes zwischen den zwei Organen, wobei die Stange umfasst: ein Gabelgelenk (20) mit einem Quer-Bolzen (40), welches mit einer Befestigungs-Lasche an dem ersten Organ zusammenwirkt, **dadurch gekennzeichnet, dass** der Bolzen (40) an dem Gabelgelenk (20) mittels Vorrichtungen (42, 44), welche Lager bilden, jeweils im Inneren einer im Gabelgelenk angeordneten Aufnahme (23,25), befestigt ist, wobei die Achse (40A) des Gabelgelenks und die Achse (42A beziehungsweise 44A) der Lager-bildenden Vorrichtungen nicht übereinstimmen, wobei die Stange (1) eine Anschlag-vorrichtung (22B, 24B) umfasst, welche es ermöglicht, den Bolzen in wenigstens zwei Positionen gegenüber dem Gabelgelenk zu immobilisieren.

2. Stange gemäß Anspruch 1, bei welcher wenigstens eines (42) der zwei Lager (42,44) mit dem Bolzen (40) verbunden ist.

3. Stange gemäß Anspruch 1 oder 2, bei welcher die Lager-bildenden Vorrichtungen (42,44) wenigstens eine Fläche umfassen, welche einen Anschlag (422A, 442A) bildet, welcher mit der Anschlag-Vorrichtung (22B, 24B) an der Stange zusammenwirkt.

4. Stange gemäß Anspruch 3, bei welcher die Lager-bildenden Vorrichtungen (42,44) eine Mehrzahl von Anschlag-Flächen (422A beziehungsweise 442A) umfassen, welche gemäß eines Polygons angeordnet sind.

5. Stange gemäß Anspruch 4, wobei das Polygon von vier bis sechs Seiten umfasst.

## Claims

1. A rigid link (1) between a first member and a second member, including a means for adjusting the distance between both members, said link including a yoke (20) with a transversal stud (40), cooperating with a fastening tab on the first member, **characterised in that** the stud (40) is mounted on the yoke (20) by bearing-forming means (42, 44), each inside a recess (23, 25) laid out on the yoke, whereas the axis (40A) of the stud and the axis (42A, respectively 44A) of the bearing-forming means are not confused, whereby the link (1) includes stopping means (22B, 24B) in order to lock the stud in at least two different positions, relative to the yoke.

2. A link according to claim 1, whereof at least one (42) of both bearings (42,44) is integral with the stud (40).

3. A link according to claim 1 or 2, whereof the bearing-forming means (42, 44) include at least one surface forming a stop (442A, 442A) cooperating with the stopping means (22B, 24B) on the link.

4. A link according to claim 3, whereof the bearing-forming means (42, 44) include a plurality of stopping surfaces (422A, respectively 442A) arranged as a polygon.

5. A link according to claim 4, whereof the polygon includes four to six sides.
